# EUROPEAN PATENT APPLICATION

(11) **EP 1 288 055 A2**
(43) Date of publication of application: **05.03.2003**
(21) Application number: 02004319.6
(22) Date of filing: 28.02.2002
(51) Int. Cl.: B60K 31/00

(54) **Adaptive cruise control apparatus and system**

(30) Priority: 30.08.2001 JP 2001260583
(71) Applicant: Hitachi Ltd., Tokyo (JP)
(72) Inventor: Adachi, Hidefumi, Hitachi, Ltd., Intell.Prop.Group, Chiyoda-ku, Tokyo 100-8220 (JP)
(74) Representative: Beetz & Partner Patentanwälte

(57) **Abstract**

The invention relates to an ACC apparatus for a vehicle in which, responsive to cancellation of ACC by the driver, a new cruise speed is selected depending upon a traveling environment to be encountered thereafter.

## Description

### BACKGROUND OF THE INVENTION

The present invention relates to an adaptive cruise control (ACC) apparatus and system for a vehicle that provides constant-speed travel control when a distance between the vehicle and a preceding vehicle is greater than a predetermined one and ACC when the distance is less than the predetermined one, and more particularly to an ACC apparatus and system that automatically resumes the ACC after same has been temporarily canceled.

Vehicles are commercially available that can each optionally employ ACC that includes recognizing the behavior of a preceding vehicle with a laser radar, a millimeter-wave radar or a camera, and performing constant-speed travel when the distance between a particular one of the first-mentioned vehicles and the preceding vehicle is greater than a predetermined one and causing the first-mentioned vehicle to automatically follow up the preceding vehicle so as to maintain a constant distance to the preceding vehicle after the first-mentioned vehicle catches up with the preceding vehicle, in order to give comfortableness to a driver in the first-mentioned vehicle.

It is assumed that the ACC is used on a highway and settable within predetermined ranges of speeds. When the driver in the particular vehicle performs a predetermined operation that includes a braking operation, an accelerator operation that brings about more than a set speed or a shift-up/down operation, the ACC is canceled.

In order to resume the ACC, the cruise speed needs to be either reset within a predetermined range of speeds or a resume switch needs to be operated. In order to avoid such troublesome operation, JP-A-9-290665 has proposed a system for automatic resumption of the ACC by detecting the accelerator operation performed after the ACC is canceled by the braking operation.

With this system, however, the ACC is resumed uniquely. Therefore, a problem will arise that although the driver steps on the brake pedal to cancel the ACC, the ACC is still maintained and hence the driver will have a feeling of wrongness. This is because the driver who manipulates the vehicle of his or her own accord based on a great amount of information makes a great demand/has great expectations on the ACC that detects the distance between the driver's vehicle and the preceding vehicle with a sensor such as a laser radar or a millimeter-wave radar and feeds back the resulting data.

### SUMMARY OF THE INVENTION

In order to solve this problem, the present invention provides an ACC apparatus/system in which even when the ACC is cancelled by the driver's manipulation irrespective of a range of the ACC, the ACC is automatically resumed at an appropriate cruise speed to thereby continue the ACC that pays serious attention to the driver's intention without giving the driver a feeling of wrongness and frees the driver's from dissatisfaction as much as possible.

In the inventive apparatus and system, a cruise speed depending upon the traveling environment to be encountered after cancellation of the ACC is selected to thereby resume the ACC.

In more detail, with a particular vehicle in which use of the speed range for the ACC is limited (for example, on a highway), the ACC can be canceled irrespective of the driver's intention (for example, when the preceding vehicle slows down under control of the distance between the particular vehicle and the preceding one). Although when the particular vehicle speed then increases to within the speed range for the ACC, a desired cruise speed is selected in the traveling environment to be encountered at that time to thereby resume the ACC automatically.

Other objects, features and advantages of the invention will become apparent from the following description of the embodiments of the invention taken in conjunction with the accompanying drawings.

### BRIEF DESCRIPTION OF THE DRAWINGS

FIG. 1 shows one embodiment of an ACC system according to the present invention;
FIG. 2 shows one embodiment of a whole flowchart according to the present invention;
FIG. 3 illustrates a control flowchart indicative of an ACC subroutine of FIG. 2;
FIG. 4 illustrates a control flowchart indicative of a brake operation subroutine of FIG. 3;
FIG. 5 illustrates a control flowchart indicative of an accelerator operation subroutine of FIG. 3;
FIG. 6 illustrates a control flowchart indicative of a shift-up/down operation subroutine of FIG. 3;
FIG. 7 illustrates a control flowchart indicative of a steering operation subroutine of FIG. 3;
FIG. 8 illustrates a control flowchart indicative of a turn-signal operation subroutine of FIG. 3;
FIGS. 9A and 9B are each a timing chart involving a brake operation;
FIGS. 10A and 10B are each a timing chart involving an accelerator operation;
FIG. 11 illustrates several examples of traveling environment detecting means; and
FIG. 12 illustrates one example of a vehicle speed to be set when the ACC is resumed depending upon the traveling environment.

### DESCRIPTION OF THE INVENTION

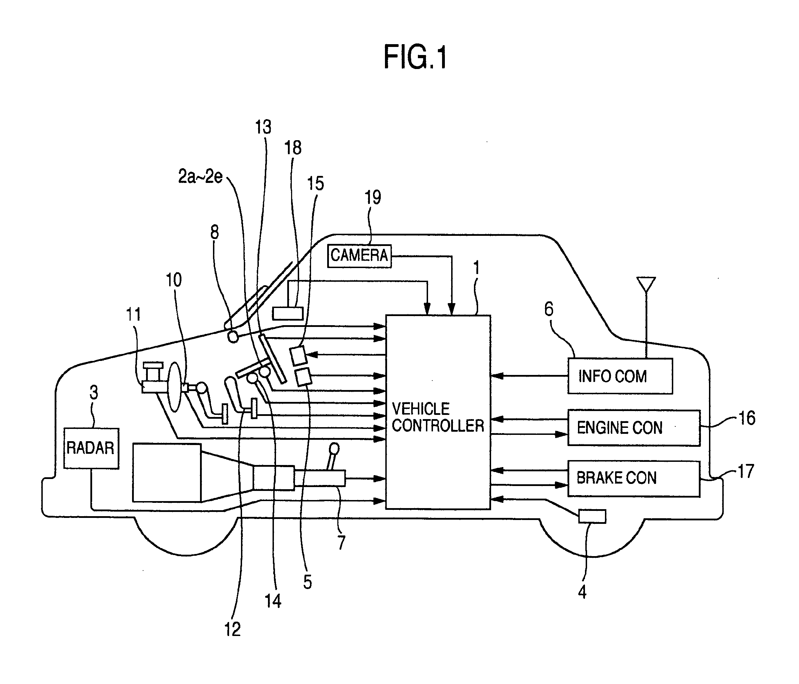

FIG. 1 illustrates one embodiment of a system for ACC provided by a particular vehicle.

This ACC is such that the particular vehicle recognizes the behavior of the preceding vehicle with a radar device 3, travels at a predetermined speed when the distance between the particular vehicle and the preceding one is over a set distance, based on information about the recognized behavior of the preceding vehicle and information from a vehicle speed sensor 4, and after catching up with the preceding vehicle, the particular vehicle automatically follows up the preceding vehicle while maintaining a set inter-vehicle distance.

A vehicle controller 1 is a main controller that provides adaptive cruise control (ACC). Data necessary for the ACC is set by a main switch 2a that starts/stops the function of the ACC, a set switch 2b that sets a cruise speed in the constant travel, a resume switch 2c that resumes the ACC after temporary cancellation, a cancel switch 2d that temporarily interrupts the ACC function; and a tap switch 2e that sets an inter-vehicle time to the preceding vehicle. Thus, the driver in the particular vehicle is informed of the set cruise speed and the control situation by a display device 15, which may include not only a display screen, but also an acoustic information function.

An engine controller 16 controls a throttle opening in accordance with a target value set by the vehicle controller 1 to adjust an air intake quantity to the engine or an engine output. A brake controller 17 controls a booster or a hydraulic actuator to adjust the brake's hydraulic pressure to finally control the inter-vehicle distance in a feedback manner to thereby achieve the ACC.

Traveling-environment detecting means includes traveling environment mode select switches 18, a vehicle speed sensor 4, a car navigator 5, an information communication device (for example, a highway toll reception system) 6, a gearshift 7, a wiper switch 8 and a camera 19. The traveling environment can be understood as a state determined by the information from at least one of those traveling-environment detecting means. Signals from those detecting means are forwarded to the vehicle controller 1. In addition, in order to reflect the driver's intention on the ACC, signals from a release switch 10 that is operated only when the driver steps on the brake pedal and not when the automatic brake is operated, a brake-hydraulic pressure sensor 11, a clutch switch 12, a steering angle sensor 13, and a turn-signal switch 14 are also forwarded to the vehicle controller 1.

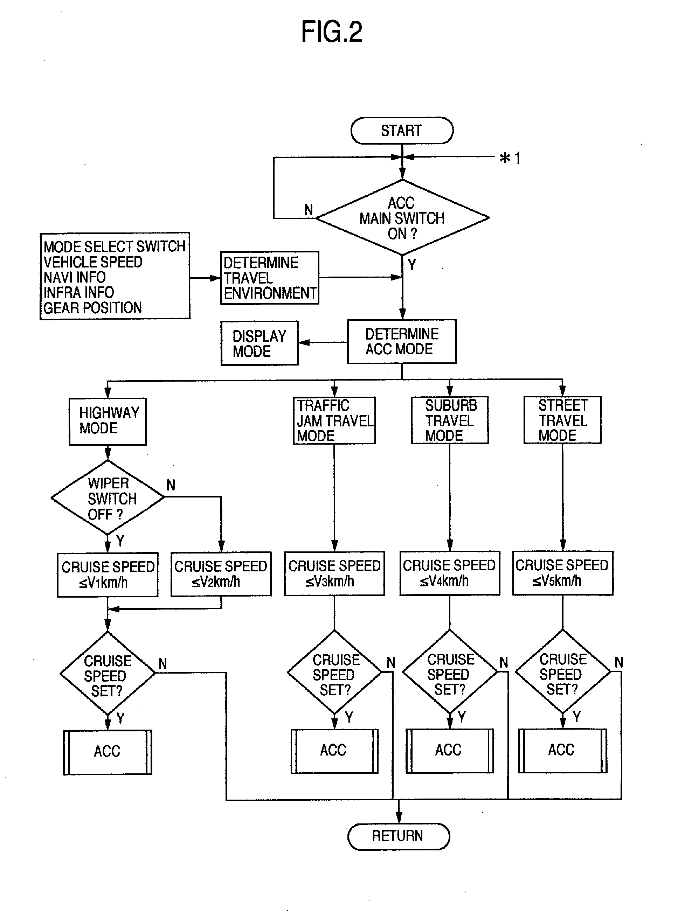

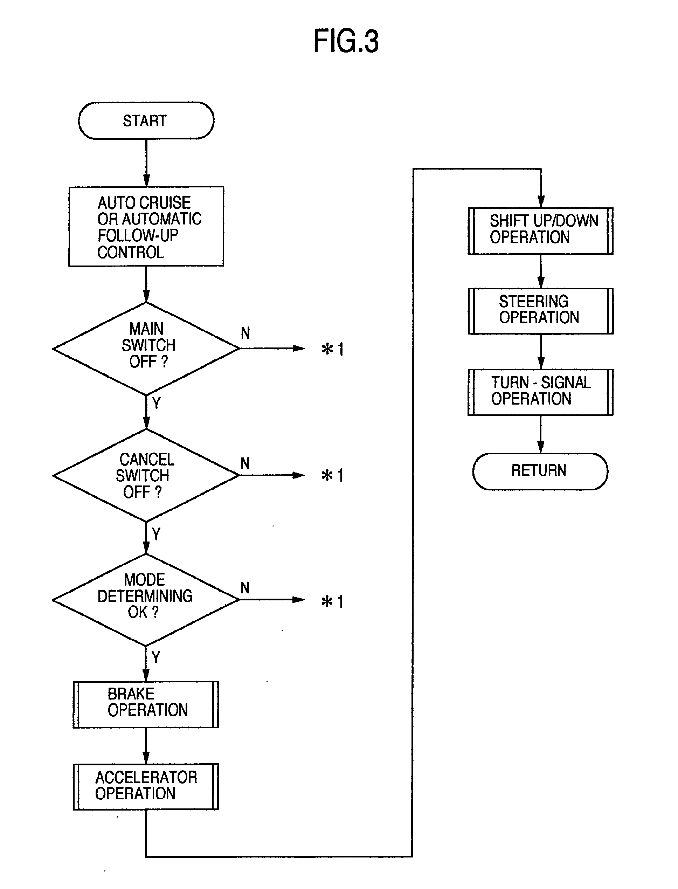

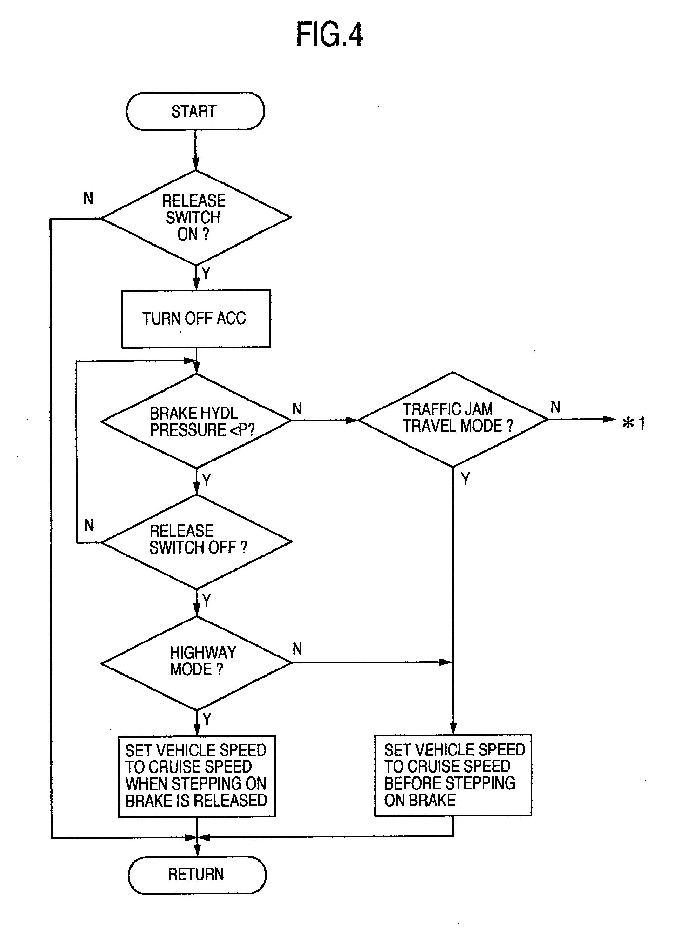

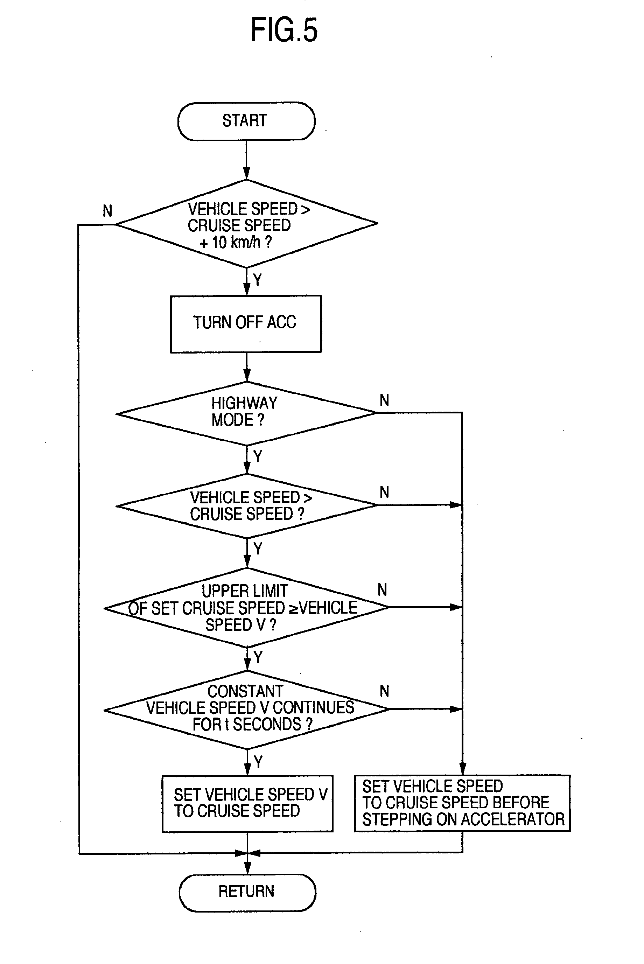

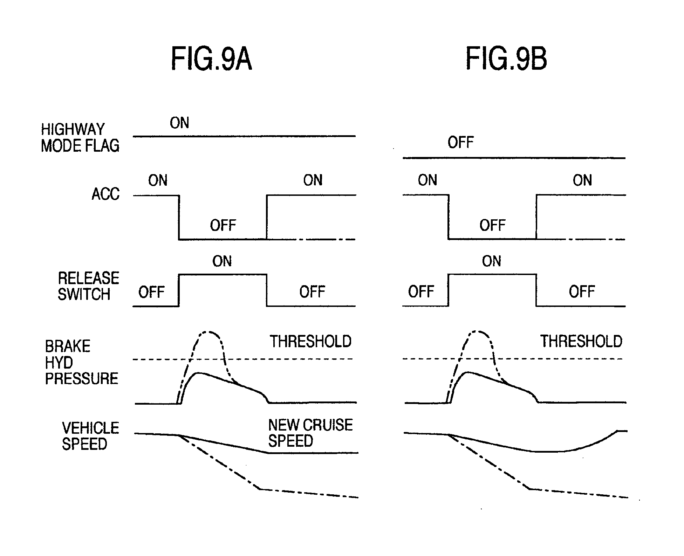

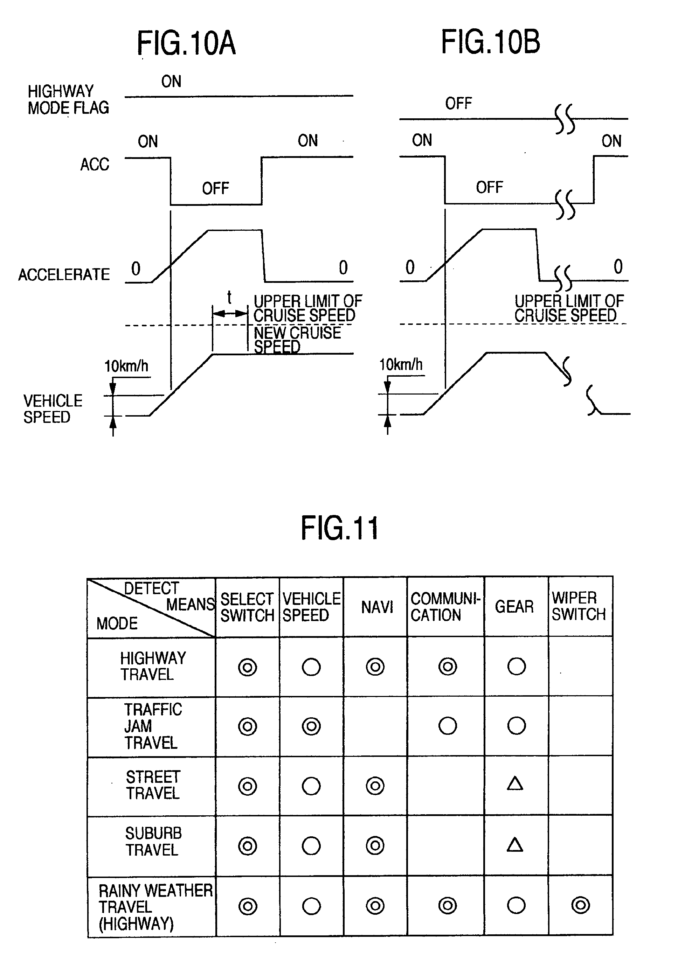

FIGS. 2-8 are each a flowchart indicative of an example of the ACC. FIG. 2 outlines the ACC. FIG. 3 illustrates ACC subroutines. FIGS. 4-8 illustrate the respective FIG. 3 subroutines. FIGS. 9A and 9B each show a timing chart involving a brake operation, and correspond to FIG. 4. FIGS. 10A and 10B are each a timing chart involving an accelerator operation, and correspond to FIG. 5. The ACC provided by the present invention will be described next with reference to the respective timing charts.

The solid lines in FIGS. 9A and 10A suppose an auto cruise state on a highway.

In deceleration, the cruise speed is replaced with the decelerated vehicle speed brought about by the brake operation (FIG. 4) whereas in acceleration the cruise speed is replaced with the vehicle speed accelerated (FIG. 5). Thus, an auto cruise is available easily at a vehicle speed desired by the driver to thereby cause the driver to use the ACC easily. Thus, after acceleration, maintenance of the stabilized vehicle speed is cruise speed replace conditions. Therefore, the driver is informed of the replacement of the cruise speed with the accelerated speed by visual indication or acoustic information when the cruise speed is replaced with the accelerated speed.

When the vehicle speed is maintained beyond an upper limit of the cruise speed, this cruise speed becomes an upper limit. Dot-dashed lines of FIGS. 9A and 9B each illustrate rapid deceleration, in which case it is evident that the drivers has no intention of maintaining the ACC and that, judging from the brake pressure, the ACC is not automatically resumed.

Solid lines in FIGS. 9B and 10B each suppose an auto cruise situation except on highways, and shows that after deceleration and acceleration, respectively, the vehicle speed is returned to the automatic cruise speed (FIGS. 4 and 5). In rapid deceleration shown by dot-dashed lines in FIGS. 9B and 10B the ACC is not automatically resumed, which is based on exactly the same concept as in the highway mode (FIG. 9A). Even in the driver's operation other than this operation, the driver can appropriately determine depending upon the traveling environment whether or not the ACC should be resumed to thereby achieve the ACC which pays serious attention to the driver's intention without giving the driver a feeling of wrongness.

In one example, there are provided a plurality of switches each to be selected by the driver as a respective traveling-environment detecting means. The traveling environments may include, for example, "highway", "traffic jam area", "street", "suburb", "rainy weather" classified by road environment and weather. The switches correspond to traveling environment and automatic switching modes. Alternatively, the driver may select several ones from the plurality of switches so that the most appropriate switch representing the traveling environment at that time can then be selected automatically (FIG. 2).

The traveling-environment detecting means may be based on a vehicle speed, for example, to specify traffic jam traveling based on an average vehicle speed, a minimum vehicle speed, a maximum vehicle speed and a traveling pattern, in a predetermined time.

As a further example, the traveling-environment detecting means may be based on map information for car navigation, for example, to specify a road or highway environment such as a highway, a dedicated vehicle road, a street or suburb.

As another example, the traveling-environment detecting means may be based on communication information from an infrastructure, for example, information from a highway toll reception system to reliably specify a highway concerned.

As a still further example, the traveling-environment detecting means may be based on the position of a gear to be shifted. By combining this means with the traveling-environment detecting means based on the vehicle speed, mentioned above, the respective traveling environments are estimated with high accuracy.

As another example, the traveling-environment detecting means may be a wiper switch to thereby specify a rainy weather or snowfall. An ACC system is provided in which an upper vehicle-speed value set when the wiper is in operation assumes a lower value than when the wiper is not in operation. In contrast, the ACC is maintained or canceled in the case of vehicles commercially available at present.

Some or all of the traveling environment-detecting means mentioned above may be combined to detect the traveling environment more reliably.

As an example, the ACC may be canceled by the brake operation.

Generally, when the driver steps on the brake with a rapid deceleration, for example, of more than 0.3 G, the driver can be regarded as having an unconscious intention of canceling the ACC. However, even when the driver has no intention of canceling the ACC in a deceleration, for example, of less than 0.1 G, the prior art ACC system determines based on the switching of the brake switch that a braking operation is intended to cancel the ACC to thereby cause the driver to feel dissatisfied.

In order to avoid this problem, an ACC system is provided in which, for example, when the driver slows down a constant speed of 80 km/h of his or her vehicle that has traveled in the ACC to a speed of 30 km/h by stepping down the foot brake and then stops the foot brake operation (for example, by removing his or her foot from the brake), the ACC is maintained or automatically resumed (the set cruise speed may still remain 80 km/h or change) when the deceleration is less than 0.1 G whereas the ACC is canceled when the deceleration is 0.3 G or more.

In a system which employs a brake pressure as a replacing signal to determine deceleration and is capable of following up the preceding vehicle only with the brake operation in traffic jam traveling, the driver's intention cannot be determined only with the brake pressure because in a stop state the brake pedal has been stepped deeply on to the same level as a rapidly increasing hydraulic pressure is produced. In order to avoid this situation, an ACC system is provided in which the ACC is maintained or automatically resumed even when the driver performs the foot brake operation during traveling at a speed of 0-20 km/h in the ACC control (the set cruise speed may be that employed before the foot brake operation or be changed). In contrast, none of the vehicles commercially available at present provide the ACC at a speed of less than 30 km/h. The ACC is canceled according to the concept of the vehicles commercially available at present, so that those vehicles commercially available at present cannot be freed from the above-mentioned problems.

From such standpoint of view, resumption of the ACC at an appropriate cruise speed depending upon a traveling environment which will be encountered after the brake operation is greatly effective in satisfying the driver. When the driver performs a predetermined operation (including stepping on the brake) to thereby cancel the ACC and then stops the predetermined operation (including removing his or her foot from the brake) and unless other operations such as the steering operation and the turn-signal operation are performed between the cancellation of the ACC and the stoppage of the predetermined operation, the stoppage of the predetermined operation is defined as termination of the predetermined operation immediately after the cancellation of the ACC (This applies likewise in other cases below).

As another example, the ACC can be canceled by an accelerator operation.

Since the ACC is canceled at the cruise speed + α (≒10 km/h) when the driver steps on the accelerator pedal to accelerate his or her vehicle to leave the preceding vehicle behind in the conventional ACC system, the ACC needs to be either reset or the resume switch should be operated when resumption of the ACC is desired after leaving the preceding vehicle behind. Also, the driver must manually reset the vehicle speed to another increased one if he or she desires. Thus, the driver must manually operate or set each time he or she desires to thereby cause the driver to feel burdensome. However, these problems can be eliminated by resuming automatically the set speed employed before canceling the ACC after the acceleration operation, or by automatically resetting the cruise speed to the normal speed when the vehicle is traveled at the normal speed higher than the set speed by the acceleration operation (FIG. 5).

To this end, an ACC system is provided in which when the driver stops the acceleration operation (for example, by removing his or her foot from the accelerator pedal) after the driver has increased the vehicle speed to a speed of 125 km/h by the acceleration operation during traveling at a speed of 80 km/h in the ACC, the ACC is maintained or resumed automatically (the set cruise speed may remain at 80 km/h or be changed). In contrast, since the ACC is canceled or the set cruise speed (80 km/h) is maintained in the vehicles commercially available at present, those vehicles cannot be freed from the above-mentioned problems.

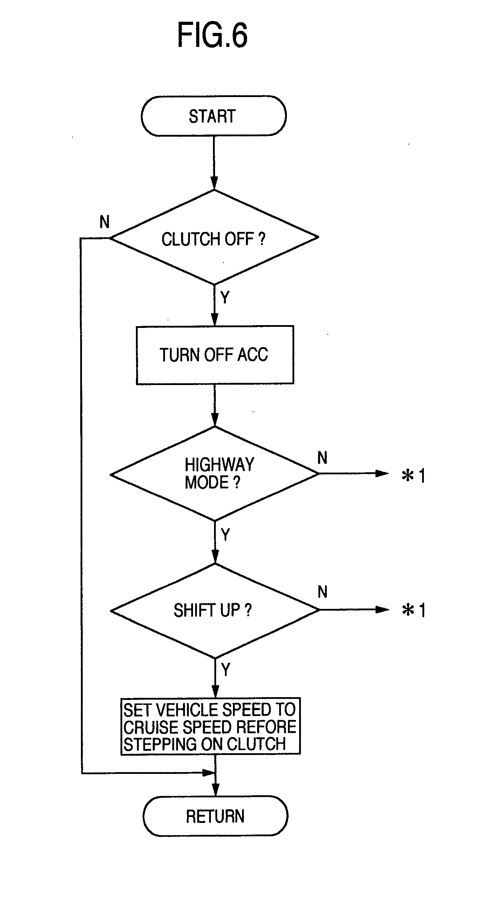

As a further example, the ACC can also be canceled by the shift-up/down operation (FIG. 6).

According to this example, the problem that the ACC will be canceled when the driver shifts up without having any intention of canceling the ACC during the ACC in a manual transmission vehicle of the conventional ACC system is eliminated.

In order to eliminate this problem, according to the present invention, an ACC system is provided in which the ACC is maintained or automatically resumed when the driver shifts up during traveling at a constant speed of 80 km/h in the ACC, while the ACC is canceled when the driver shifts down (FIG. 6). In contrast, the ACC is canceled or maintained whether or not the driver shifts down/up in one of the vehicles commercially available at present, so that those commercially available at present cannot be freed from the above-mentioned problems.

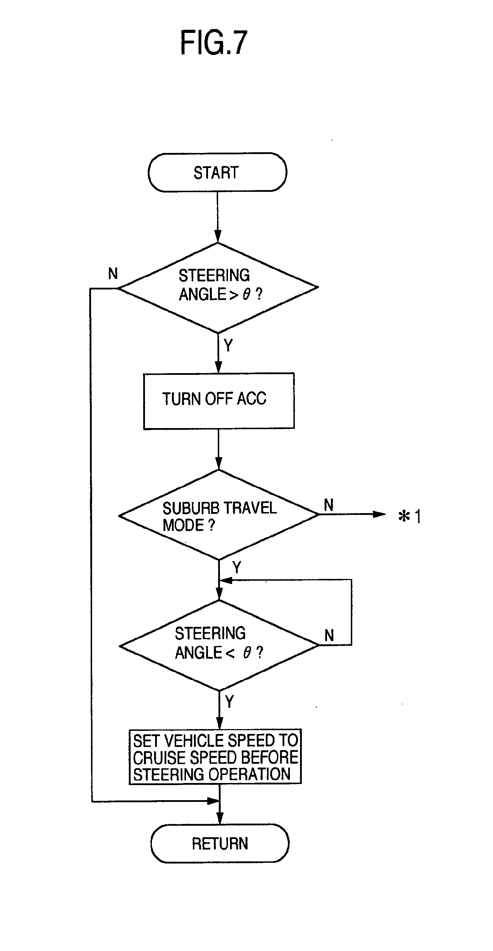

As a further example, the ACC can also be canceled by the steering operation (FIG. 7).

According to this example, the problem is eliminated that the sensor provided in the particular vehicle misses the preceding vehicle at a curve of a road to thereby accelerate the particular vehicle to the cruise speed because the conventional ACC system is controlled irrespective of the steering operation.

In this example, an ACC system is provided in which the ACC is maintained when the driver turns the steering wheel through less than 10 degrees from its neutral position and canceled when the driver turns the steering wheel through 45 degrees or more during traveling at a constant speed of 40 km/h in the ACC (FIG. 7). In contrast, since the ACC is maintained at all times in any one of the vehicles commercially available at present, the vehicles commercially available at present cannot be freed from the above-mentioned problems.

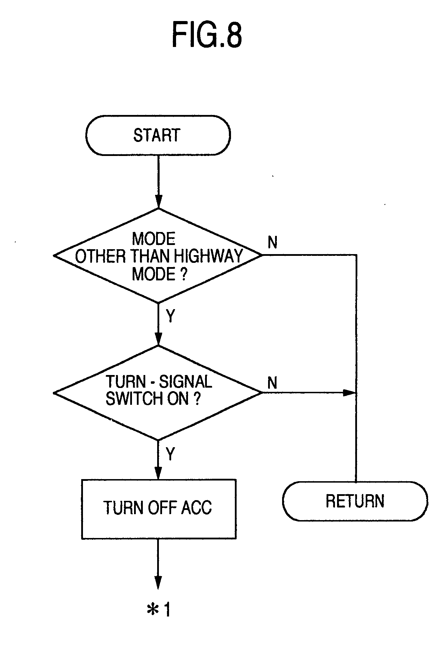

As a further example, the ACC can also be canceled by a turn-signal operation (FIG. 8).

Except on a highway, the turn-signal operation serves to cancel the ACC to cause the vehicle to travel in a decelerated state based on the engine brake to thereby eliminate a feeling of wrongness from the driver during traveling at a low or medium speed in a street or suburb.

In this example, an ACC system is provided in which when the driver performs a turn-signal operation during traveling at a constant speed in the ACC, the ACC is maintained when the constant speed is 80 km/h and canceled when the constant speed is 40 km/h. In contrast, since the ACC is maintained, the vehicles commercially available at present cannot free from the above-mentioned problems.

By combining some or all of the above examples, ACC is provided that pays serious attention to the driver's intention and gives the driver no feeling of wrongness.

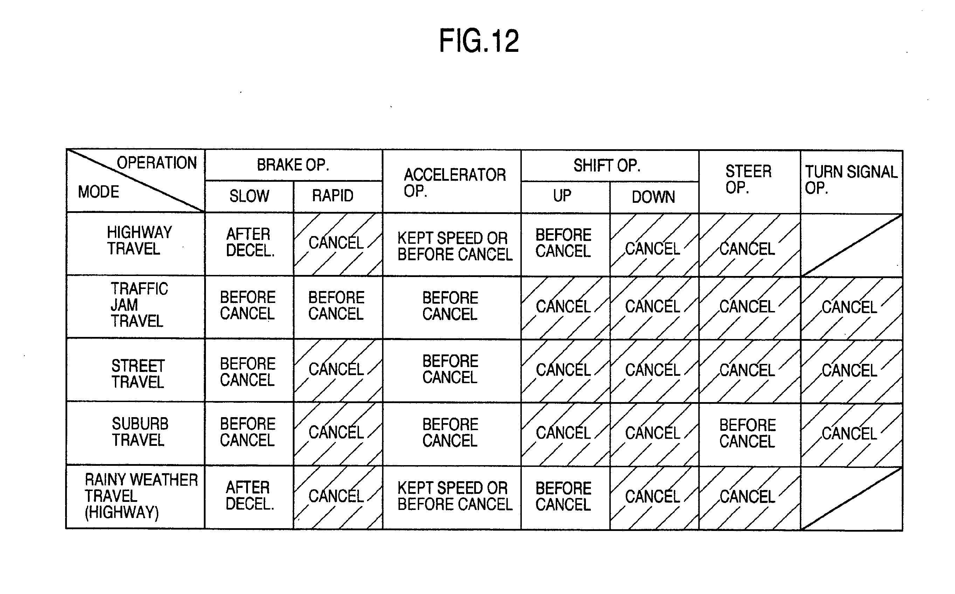

By using a combination of some or all of the above traveling-environment detecting means (FIG. 11) and a combination of some or all of the above operations that cancel the ACC (FIG. 12), the ACC is provided that is capable of recognizing the traveling-environment appropriately, pays serious attention to the driver's intention and gives the driver no feeling of wrongness.

Cancellation of the ACC described in this application is performed not by positive expression of a driver's intention such as pushing a cancel switch, but by negative expression of the driver's intention, as mentioned above. In other words, it means automatic cancellation, for example, performed by stepping on the brake/accelerator/or by shifting up/down, etc.

The ACC is not uniformly canceled or ignored by the driver's driving operation, but coped with based on the traveling environment. As the case may be, the ACC is automatically resumed after temporary cancellation to allow serious consideration to be paid to the driver's intention and to achieve easier ACC. As a result, the values of the vehicles that use the present invention as commodities are enhanced.

In addition the following embodiments are provided:

### Example 1:

The ACC apparatus for a vehicle according to claim 1, 2 or 3, wherein the traveling environment detecting means comprises one of switches to be selected by the driver.

### Example 2:

The ACC apparatus for a vehicle according to claim 1, 2 or 3, wherein the traveling environment detecting means is based on the speed of the vehicle.

### Example 3:

The ACC apparatus for a vehicle according to claim 1, 2 or 3, wherein the traveling environment detecting means is based on map information for car navigation (including GPS information).

### Example 4

The ACC apparatus for a vehicle according to claim 1, 2 or 3, wherein the traveling environment detecting means is based on information such as road traffic information or automatic toll reception information to be received by the vehicle with the aid of radio-wave or optical means from an infrastructure.

### Example 5:

The ACC apparatus for a vehicle according to claim 1, 2 or 3, wherein the traveling environment detecting means is based on the position of a gear.

### Example 6:

The ACC apparatus for a vehicle according to claim 1, 2 or 3, wherein the traveling environment detecting means comprises a wiper actuated switch.

### Example 7:

The ACC apparatus for a vehicle according to claim 1, 2 or 3, wherein the traveling environment detecting means is based on a processed image signal from a camera.

### Example 8:

The ACC apparatus for a vehicle according to claim 1, 2 or 3, wherein the traveling environment detecting means is based on a plurality of the traveling environment detecting means of Examples 1-7.

### Example 9:

The ACC apparatus for a vehicle according to claim 1 or 3, wherein a predetermined operation excluding a cancel switch operation and a main switch operation comprises a brake operation.

### Example 10:

The ACC apparatus for a vehicle according to claim 1 or 3, wherein a predetermined operation excluding a cancel switch operation and a main switch operation comprises an accelerator operation.

### Example 11:

The ACC apparatus for a vehicle according to claim 1 or 3, wherein a predetermined operation excluding a cancel switch operation and a main switch operation comprises a shift-up/down operation.

### Example 12:

The ACC apparatus for a vehicle according to claim 1 or 3, wherein a predetermined operation excluding a cancel switch operation and a main switch operation comprises a steering operation.

### Example 13:

The ACC apparatus for a vehicle according to claim 1 or 3, wherein a predetermined operation excluding a cancel switch operation and a main switch operation comprises a turn-signal operation.

### Example 14:

The ACC apparatus for a vehicle according to claim 1 or 3, wherein a predetermined operation excluding a cancel switch operation and a main switch operation comprises operations of a plurality of the means of Examples 9-13.

### Example 15:

The ACC apparatus for a vehicle according to claim 1 or 3, comprising a predetermined operation excluding the operation of the traveling environment detecting means of Example 8 and the operations of the cancel switch operation and main switch operation of Example 14.

### Example 16:

A vehicle control method of performing adaptive cruise control (ACC) for a vehicle based on a speed of the vehicle, a distance between the vehicle and a preceding vehicle, and a traveling environment obtained by traveling environment detecting means, the method comprising the steps of:
responsive to cancellation of the ACC, selecting a cruise speed based on a traveling environment to be encountered after the cancellation of the ACC; and
resuming the ACC automatically in which the cruise speed is an upper limit.

### Example 17:

The vehicle control method according to example 16, wherein a range of vehicle speeds in which a desired cruise speed is settable is provided, and comprising the steps of:
responsive to the speed of the first-mentioned vehicle coming into the range of vehicle speeds after coming out of the range of vehicle speeds to thereby cancel the ACC, selecting a cruise speed based on a traveling environment to be encountered after the cancellation of the ACC; and
resuming the ACC automatically in which the cruise speed is an upper limit.

### Example 18:

The vehicle control method according to example 17, wherein the range of vehicle speeds overlaps with a second range of vehicle speeds defined between a first value to which the speed of the first-mentioned vehicle comes out of the first-mentioned range of vehicle speeds and a second value to which the speed of the first-mentioned vehicle comes into the first-mentioned range of vehicle speeds.

### Example 19:

The vehicle control method according to any one of examples 16-18, wherein the traveling environment detecting means comprises at least one of:
a plurality of switches one of which is to be selected by the driver;
means based on a vehicle speed;
means based on map information for car navigation (including GPS information);
means based on information such as road traffic information or automatic toll reception information received by the vehicle with the aid of radio-wave or optical means from an infrastructure;
means based on a position of a gear;
a wiper actuated switch; and
means based on a processed image signal from a camera.

### Example 20:

The vehicle control method according to example 16, wherein the ACC is cancelled by at least one of a brake operation, an accelerator operation, a shift-up/down operation, a steering operation, and a turn-signal operation.

### Example 21:

The vehicle control method according to example 16, wherein the ACC comprises inter-vehicle distance control and/or constant-speed travel control.

### Example 22:

A vehicle which performs adaptive cruise control (ACC) for a vehicle based on a speed of the vehicle, a distance between the vehicle and a preceding vehicle, and a traveling environment obtained by traveling environment detecting means, wherein, responsive to cancellation of the ACC, the vehicle:
selects a cruise speed based on a traveling environment to be encountered after the cancellation of the ACC; and
resumes the ACC automatically in which the cruise speed is an upper limit.

### Example 23:

The vehicle according to example 22, wherein a range of vehicle speeds in which a desired cruise speed is settable is provided, and wherein, responsive to the speed of the first-mentioned vehicle coming into the range of vehicle speeds after coming out of the range of vehicle speeds to thereby cancel the ACC, the 5 first-mentioned vehicle:
selects a cruise speed based on a traveling environment to be encountered at that time; and
resumes ACC automatically in which the cruise speed is an upper limit.

### Example 24

The vehicle according to example 23 wherein the range of vehicle speeds overlaps with a second range of vehicle speeds defined between a first value to which the speed of the first-mentioned vehicle comes out of the first-mentioned range of vehicle speeds and a second value to which the speed of the first-mentioned vehicle comes into the first-mentioned range of vehicle speeds.

### Example 25:

The vehicle according to any one of examples 22-24, wherein the traveling environment detecting means comprises at least one of:
a plurality of switches each to be selected by the driver;
means based on a vehicle speed;
means based on map information for car navigation (including GPS information);
means based on information such as road traffic information or automatic toll reception information received by the vehicle with the aid of radio-wave or optical means from an infrastructure;
means based on a position of a gear;
a wiper actuated switch; and
means based on a processed image signal from a camera.

### Example 26:

The vehicle according to example 22, wherein the ACC is cancelled by at least one of a brake operation, an accelerator operation, a shift-up/down operation, a steering operation, and a turn-signal operation.

### Example 27:

The vehicle according to example 22, wherein the ACC comprises inter-vehicle distance control and/or constant-speed travel control.

### Example 28:

A control apparatus for a vehicle which performs adaptive cruise control (ACC) for a vehicle based on a speed of the vehicle, a distance between the vehicle and a preceding vehicle, and a traveling environment obtained by traveling environment detecting means, wherein, responsive to cancellation of the ACC, the vehicle:
selects a cruise speed based on a traveling environment to be encountered after the cancellation of the ACC; and
resumes the ACC automatically in which the cruise speed is an upper limit.

### Example 29:

The control apparatus according to example 28, wherein a range of vehicle speeds in which a desired cruise speed is settable is provided, and wherein, responsive to the speed of the first-mentioned vehicle coming into the range of vehicle speeds after coming out of the range of vehicle speeds to thereby cancel the ACC, the first-mentioned vehicle:
selects a cruise speed based on a traveling environment to be encountered at that time; and
resumes ACC automatically in which the cruise speed is an upper limit.

### Example 30

The control apparatus according to example 29 wherein the range of vehicle speeds overlaps with a second range of vehicle speeds defined between a first value to which the speed of the first-mentioned vehicle comes out of the first-mentioned range of vehicle speeds and a second value to which the speed of the first-mentioned vehicle comes into the first-mentioned range of vehicle speeds.

### Example 31:

The control apparatus according to any one of examples 28-30, wherein the traveling environment detecting means comprises at least one of:
a plurality of switches one of which is to be selected by the driver;
means based on a vehicle speed;
means based on map information for car navigation (including GPS information);
means based on information such as road traffic information or automatic toll reception information received by the vehicle with the aid of radio-wave or optical means from an infrastructure;
means based on a position of a gear;
a wiper actuated switch; and
means based on a processed image signal from a camera.

### Example 32:

The control apparatus according to example 28, wherein the ACC is cancelled by at least one of a brake operation, an accelerator operation, a shift-up/down operation, a steering operation, and a turn-signal operation.

### Example 33:

The control apparatus according to example 28, wherein the ACC comprises inter-vehicle distance control and/or constant-speed travel control.

It should be further understood by those skilled in the art that the foregoing description has been made on embodiments of the invention and that various changes and modifications may be made in the invention without departing from the spirit of the invention and the scope of the appended claims.

## Claims

1. An adaptive cruise control (ACC) apparatus for a vehicle, comprising means for (4) sensing a speed of the vehicle, means for (1) detecting a distance between the vehicle and a preceding vehicle, means for (7) accelerating/decelerating the first-mentioned vehicle, and means for (18) detecting a traveling environment, in which when the distance between the first-mentioned vehicle and the preceding vehicle is greater than a set value, a preset cruise speed is maintained whereas when the distance between the first-mentioned vehicle and the preceding vehicle is less than the set value, the distance is maintained at a predetermined value, and in which, responsive to a predetermined operation excluding operations of a cancel switch (2d) and a main switch (2a) based on a driver's intention of canceling the ACC terminating immediately after the cancellation of the ACC, the driver driving the first-mentioned vehicle, a cruise speed is selected depending upon a traveling environment to be encountered at that time to automatically resume the ACC.

2. An adaptive cruise control (ACC) apparatus for a vehicle comprising means for (4) sensing a speed of the vehicle, means for (1) detecting a distance between the vehicle and a preceding vehicle, means for (7) accelerating/decelerating the first-mentioned vehicle, and means for (18) detecting a traveling environment, in which when the distance between the first-mentioned vehicle and the preceding vehicle is greater than the set value, a preset cruise speed is maintained whereas when the distance between the first-mentioned vehicle and the preceding vehicle is less than the set value, the distance is maintained at a predetermined value and a range of vehicle speeds to be controlled is limited, and in which, responsive to the speed of the first-mentioned vehicle increasing to come into the range of vehicle speeds immediately after the ACC is canceled due to the speed of the first-mentioned vehicle being decreased by deceleration of the preceding vehicle to thereby come out of the range of vehicle speeds during control of the distance between the first-mentioned vehicle and the preceding vehicle, a cruise speed is selected depending upon a traveling environment to be encountered at that time to automatically resume the ACC.

3. An adaptive cruise control (ACC) apparatus for a vehicle comprising means for (4) sensing a speed of the vehicle, means for (1) detecting a distance between the vehicle and a preceding vehicle, means for (7) accelerating/decelerating the first-mentioned vehicle, and means for (18) detecting a traveling environment, in which when the distance between the first-mentioned vehicle and the preceding vehicle is greater than the set value, a preset cruise speed is maintained whereas when the distance between the first-mentioned vehicle and the preceding vehicle is less than the set value, the distance is maintained at a predetermined value and a range of vehicle speeds to be controlled is limited, and in which, responsive to a predetermined operation excluding operations of a cancel switch (2d) and a main switch (2a) based on a driver's intention of canceling the ACC terminating immediately after the cancellation of the ACC, the driver driving the first-mentioned vehicle, a cruise speed is selected depending upon a traveling environment to be encountered at that time to automatically resume the ACC, and responsive to the speed of the first-mentioned vehicle increasing to come into the range of vehicle speeds immediately after the ACC is canceled due to the speed of the first-mentioned vehicle being decreased by deceleration of the preceding vehicle to thereby come out of the range of vehicle speeds during control of the distance between the first-mentioned vehicle and the preceding vehicle, a cruise speed is selected depending upon a traveling environment to be encountered at that time to automatically resume the ACC.

4. An ACC system for a vehicle in which an upper limit of a set cruise speed during actuation of a wiper is lower than during non-actuation of the wiper.

5. An ACC system for a vehicle in which, responsive to a driver of the vehicle stopping the foot-brake operation after the driver decreases its speed to 10-40 km/h by performing a foot-brake operation during traveling at a speed of 60-100 km/h in the ACC, the ACC is maintained in a deceleration of 0-0.1 G and cancelled in a deceleration of 0.3 G.

6. An ACC system for a vehicle, wherein even when the driver performs a foot brake operation during traveling at a speed of 0-20 km/h in ACC, the ACC is maintained or automatically resumed.

7. An ACC system for a vehicle, wherein, responsive to the driver stopping an accelerator operation after increasing the vehicle speed to 125 km/h by performing the accelerator operation during traveling at a speed of 60-10 km/h, the ACC is maintained or automatically resumed.

8. The ACC system according to at least one of claims 5 to 7, wherein the set cruise speed in the ACC is changed to a value other than that set before the foot brake operation was performed.

9. An ACC system for a vehicle in which ACC is maintained or automatically resumed when the driver shifts up and cancelled when the driver shifts down, during traveling at a speed of 60-100 km/h in the ACC.

10. An ACC system for a vehicle in which ACC is maintained responsive to a driver turning a steering wheel through 0-10 degrees from a neutral position and cancelled responsive to the driver turning the steering wheel through 45 degrees or more.

11. An ACC system for a vehicle in which when the driver performs a turn-signal operation in ACC, the ACC is maintained at a vehicle speed of 80-100 km/h and cancelled at a vehicle speed of 20-40 km/h.

12. An adaptive cruise control (ACC) system for a vehicle, the system having an ACC function and comprising:
means for (4) sensing a speed of the vehicle;
means for (1) detecting a distance between the vehicle and a preceding vehicle;
means for (18) detecting a traveling environment,
wherein, responsive to the ACC being canceled, a cruise speed is selected depending upon a traveling environment to be encountered thereafter and the ACC in which the cruise speed is an upper limit is automatically resumed.

13. The ACC system according to claim 12 wherein a range of vehicle speeds in which a desired cruise speed is settable is provided, and wherein, responsive to the speed of the first-mentioned vehicle obtained by said vehicle speed detecting means coming into the range of vehicle speeds after coming out of the range of vehicle speeds to thereby cancel the ACC, a cruise speed is selected based on a traveling environment to be encountered at that time; and the ACC automatically in which the cruise speed is an upper limit is resumed.

14. The ACC system according to claim 13 wherein the range of vehicle speeds overlaps with a second range of vehicle speeds defined between a first value to which the speed of the first-mentioned vehicle obtained by said vehicle speed detecting means comes out of the first-mentioned range of vehicle speeds and a second value to which the speed of said first-mentioned vehicle obtained by said vehicle speed detecting means comes into the first-mentioned range of vehicle speeds.

15. The ACC system according to claim 12 wherein the traveling environment detecting means comprises at least one of:
a plurality of switches one of which is to be selected by the driver;
means based on a vehicle speed;
means based on map information for car navigation (including GPS information);
means based on information such as road traffic information or automatic toll reception information received by the vehicle with the aid of radio-wave or optical means from an infrastructure;
means based on a position of a gear;
a wiper actuated switch; and
means based on a processed image signal from a camera.

16. The ACC system according to claim 12 wherein the ACC is cancelled by at least one of a brake operation, an accelerator operation, a shift-up/down operation, a steering operation, and a turn-signal operation.

17. The ACC system according to claim 12 wherein the ACC comprises inter-vehicle distance control and/or constant-speed travel control.
